# EUROPEAN PATENT SPECIFICATION

(11) **EP 2 205 019 B1**
(45) Date of publication and mention of the grant of the patent: **14.12.2011**
(21) Application number: 09180958.2
(22) Date of filing: 30.12.2009
(51) Int. Cl.: H04W 28/08, H04W 84/04, H04W 88/14

(54) **Method and system for accessing a core network node**
Verfahren und System für den Zugriff auf einen Kernnetzwerkknoten
Procédé et système pour accéder à un noeud de réseau de coeur

(30) Priority: 31.12.2008 CN 200810247432
(43) Date of publication of application: 07.07.2010
(73) Proprietor: Huawei Technologies Co., Ltd., Longgang District, Shenzhen Guangdong 518129 (CN)
(72) Inventor: Sun, Yafei, 518129, Shenzhen (CN); Zhu, Wei, 518129, Shenzhen (CN)
(74) Representative: Barth, Stephan Manuel

(56) References cited:
- WO-A1-2006/024307
- WO-A1-2008/047140
- "Digital cellular telecommunications system (Phase 2+); Universal Mobile Telecommunications System (UMTS); Intra-domain connection of Radio Access Network (RAN) nodes to multiple Core Network (CN) nodes (3GPP TS 23.236 version 7.0.0 Release 7); ETSI TS 123 236" ETSI STANDARDS, LIS, SOPHIA ANTIPOLIS CEDEX, FRANCE, vol. 3-SA2, no. V7.0.0, 1 June 2007 (2007-06-01), XP014037761 ISSN: 0000-0001

## Description

### FIELD OF THE TECHNOLOGY

The present invention relates to the field of communications technology, and more particularly to a method and system for accessing a core network (CN) node.

### BACKGROUND OF THE INVENTION

Iu interface flexibility (Iu-Flex) technology is a new technology proposed in the Third Generation Partnership Project (3GPP), which supports an intra-domain connection routing function from one radio network controller (RNC) to multiple CN nodes. An area served by multiple CN nodes is called a pool-area, load sharing is implemented among the multiple CN nodes in the pool-area, and the CN nodes are uniquely identified by network resource identifiers (NRIs) in the pool-area.

When user equipment (UE) initiates an access request to a pool-area of a CN, the UE encodes routing information according to preset rules to obtain a routing parameter Intra Domain NAS Node Selector (IDNNS), and sends the routing parameter to an RNC. The RNC searches a pre-configured mapping relationship between NRIs and CN nodes according to the routing parameter from the UE, so as to select proper CN nodes for the UE, and sends the initial UE information to the selected CN nodes.

The prior art has the following disadvantage: The prerequisite for realizing the access to multiple CN nodes based on the Iu-Flex technology is that the CN nodes support the Iu-Flex function. If the CN nodes do not support the Iu-Flex function in a current network, the CN nodes need to be upgraded, or more CN nodes need to be deployed in the existing network, so as to meet the requirement for enabling the UE to access multiple CN nodes. Therefore, the prior art has the technical defect that the access mode to multiple CN nodes is inflexible.

WO08/047140 discloses a GSM or UMTS mobile telecommunications network. Aarrangements are disclosed, in WO08/047140, which allow the network provider to verify that the access point a mobile terminal is about to commence communicating through is a legitimate and trusted base station.

3GPP TS 23.236 V7.0.0 (2006-12) discloses the specification of Intra-domain connection of Radio Access Network (RAN) nodes to multiple Core Network (CN) nodes. In the technical solution of 3GPP TS 23.236 V7.0.0, the BSC selects a CN node when receiving the message from the MS, according to the association between NRI and CN node. The content of ETSI TS 123.236 V7.0.0 is the same as the technical solution of 3GPP TS 23.236 V7.0.0.

### SUMMARY OF THE INVENTION

Accordingly, the present invention is directed to a method and system for accessing a CN node and an access device thereof, to improve the flexibility of the access mode of multiple CN nodes.

The present invention provides a method for a accessing CN node, which includes the following steps: receiving, by an access gateway, AG, a service request from an access point, AP, wherein the AG implements control and management on the AP; selecting, by the AG, a CN node to be accessed by the AP, according to a preset mapping relationship between APs and CN nodes; and sending, by the AG, the service request to the selected CN node.

The present invention also provides an access gateway, AG. The AG is configured to receive a service request from an access point, AP and the AG being configured to implement control and management on the AP. The AG comprises a CN node selecting module and a sending module. The CN node selecting module is configured to select a CN node to be accessed by the AP according to a preset mapping relationship between the APs and the CN nodes when receiving a service request from the AP.

The sending module is configured to send the service request to the selected CN node.

The present invention further provides a system for accessing CN nodes, which includes and multiple CN nodes, and further includes an access gateway, AG, according to any claimed embodiment of the present invention.

In the method and system for accessing a CN node and the access device thereof provided in the present invention, a proper CN node is selected for an AP according to a preset mapping relationship between the APs and the CN nodes, and a service request is sent to the selected CN node, thereby enabling a UE to select the CN node to be accessed from multiple CN nodes. Moreover, in the embodiments of the present invention, the CN node is not required to support the Iu-flex function. If the existing CN node does not support the Iu-flex function, the technical solutions of the present invention can be adopted without upgrading the CN node or modifying the CN. Therefore, the entire system is more practical and easy to implement, the impact on the CN is reduced, and the flexibility of access to multiple CN nodes is significantly enhanced.

### BRIEF DESCRIPTION OF THE DRAWINGS

To illustrate the technical solution according to the embodiments of the present invention or in the prior art more clearly, the accompanying drawings for describing the embodiments or the prior art are introduced briefly below. Apparently, the accompanying drawings in the following description are only some embodiments of the present invention, and persons of ordinary skill in the art can derive other drawings from the accompanying drawings without creative efforts.
FIG. 1 is a flow chart of a method for accessing CN nodes according to a first embodiment of the present invention;
FIG. 2 is a schematic diagram illustrating network architecture of an application scenario of the method for accessing CN nodes according to the present invention;
FIG. 3 is a signaling exchange diagram of a method for accessing CN nodes according to a second embodiment of the present invention;
FIG. 4a is a signaling exchange diagram of a method for accessing CN nodes according to a third embodiment of the present invention;
FIG. 4b is a schematic diagram illustrating network architecture of an application scenario in which a UMTS AP system shares the MSC with a macro network according to the present invention;
FIG. 5 is a signaling exchange diagram of a method for accessing CN nodes according to a fourth embodiment of the present invention;
FIG. 6 is a schematic structural view of an access device according to an embodiment of the present invention; and
FIG. 7 is a schematic structural view of a system for accessing CN nodes according to the present invention.

### DETAILED DESCRIPTION OF THE EMBODIMENTS

The technical solution of the present invention is clearly and completely described in the following with reference to the accompanying drawings. It is obvious that the embodiments to be described are only part rather than all of the embodiments of the present invention. Additionally, those skilled in the art can derive other embodiments from the embodiments given herein without making any creative effort, and all such embodiments are covered by the protection scope of the present invention.

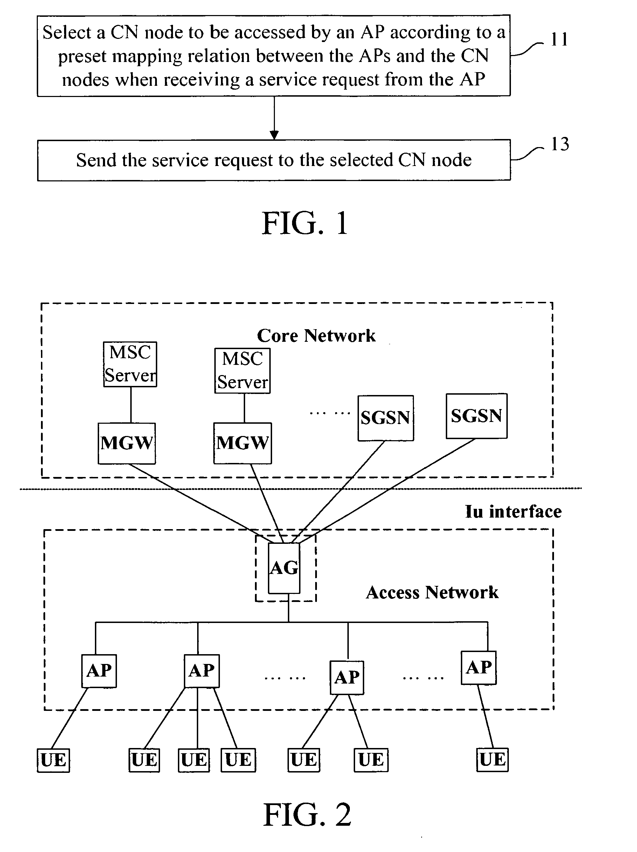

FIG. 1 is a flow chart of a method for accessing CN nodes according to a first embodiment of the present invention. As shown in FIG. 1, the method of this embodiment includes the following steps.

In step 11, when receiving a service request from an AP, a CN node to be accessed by an AP is selected according to a preset mapping relationship between APs and CN nodes.

The service request from the AP may be an initial UE message (Init UE MSG). The service request carries a link connection request from a UE. After receiving the service request from the AP, the specific AP that sends the service request can be identified according to information about a transport layer from which the service request is sent, for example, an IP address, and a Stream Control Transmission Protocol (SCTP) port number, or an ID of the AP. In this manner, a preset mapping relationship between the registration information about the APs and the CN nodes is queried to obtain the CN node to be accessed by the AP according to the information about the transport layer or the ID of the AP.

In step 13, the service request is sent to the selected CN node.

When the CN node receives the service request, a link establishment process or the like is initiated for the UE, so as to enable the UE to access the CN via the AP, thereby realizing predetermined services.

In this embodiment, a proper CN node is selected for an AP according to a preset mapping relationship between the APs and the CN nodes, and a service request is sent to the selected CN node, thereby enabling the UE to select the CN node to be accessed from multiple CN nodes. Moreover, in this embodiment, the CN node is not required to support the Iu-flex function. If the existing CN node does not support the Iu-flex function, the technical solution of this embodiment can be adopted without upgrading the CN node or modifying the CN. Therefore, the UE is enabled to access multiple CN nodes through the AP based on the technical solution of this embodiment, so that the entire system is more practical and easy to implement, the impact on the CN is reduced, and the flexibility of access to multiple CN nodes is significantly enhanced.

FIG. 2 is a schematic diagram illustrating network architecture of an application scenario of the method for accessing CN nodes according to the present invention. To better utilize the existing network resources and lower the cost of network equipment operators, equipment such as APs and access gateways (AGs) of a Universal Mobile Telecommunications System (UMTS) are introduced in the existing mobile network. The AP is mainly configured to provide a UMTS radio access function, so as to implement radio modulation/demodulation, radio resource management (RRM), power control, and other functions. The AG is generally located in an Intranet of the operator, so as to implement control and management on the APs and routing to other network elements (NEs), for example, CN nodes. An interface between the AP and the AG is called an eIu interface (that is, an Iu interface + a part of private extension interfaces); and a standard Uu interface is used between the AP and the UE, which is compatible with an existing terminal. The AP, mainly used in broadband home, buildings, or parks and typically covering a distance from tens to hundreds of meters, communicates with the AG through a network by using existing broadband equipment, and is capable of implementing various signaling exchange and services of the UMTS through further interaction between the AG and nodes of a CN, that is, CN nodes. The introduction of the AP greatly reduces the impact of high-speed data services to the mobile network, thus enabling more radio high-speed data users to access the existing radio network. Meanwhile, the introduction of the AP also removes the bottleneck of air interface resources for radio data services, and distributes the high-speed data service users in macro cells. As the power-on or power-down of the AP are random, the system traffic fluctuates greatly, resulting in heavy load and impact on the CN. For example, a great many APs are turned on at night and the system traffic is dramatically increased, while the number of APs that are turned on during the working hours in the daytime is significantly reduced; therefore, after the AP is introduced in the network, the requirements for resource sharing and load sharing of the CN become more urgent.

To illustrate the technical solutions of the present invention clearly, the application scenario shown in FIG. 2 is taken as an example in the following embodiments.

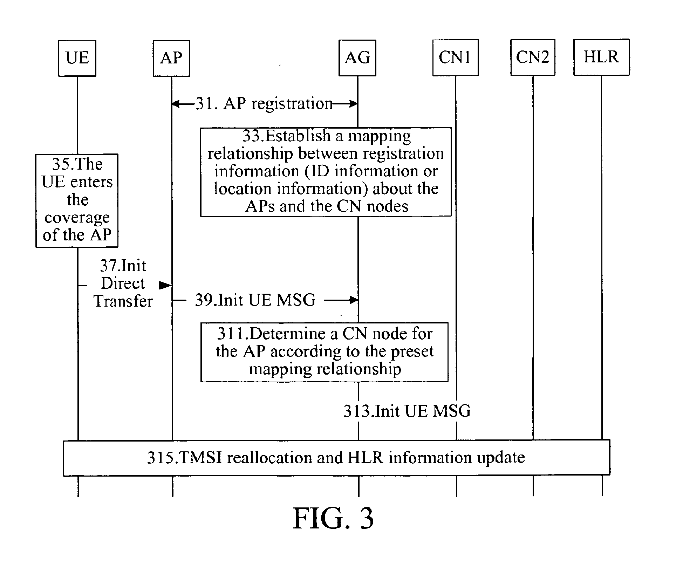

FIG. 3 is a signaling exchange diagram of a method for accessing CN nodes according to a second embodiment of the present invention. Referring to FIG. 3, the method of this embodiment includes the following steps.

In step 31, the AP initiates a registration process to the AG, and the AG acquires registration information about the AP during the registration process.

The AP integrates functions of a node B and an RNC in Wideband Code Division Multiple Access (WCDMA), and is physically connected to a CN through the AG. The AG not only implements control and management on the AP, but also converts the interface protocol from the AP to the AG into a standard Iu (that is, Iu-CS and Iu-PS) interface, so as to establish the connection with the CN.

The registration information about the AP includes: an equipment ID of the AP (AP-ID), or a mobile network ID of the AP (PLMN-ID), or an area ID of the AP, or an area ID of a macro network where the AP is located, or information about a geographic location of the AP, or information about a broadband fixed network that the AP accesses. The area ID of the AP includes: a location area code (LAC) of the AP, a routing area code (RAC) of the AP, a service area code (SAC) of the AP, or the like. The area ID of the macro network where the AP is located includes: an LAC of the macro network where the AP is located, an RAC of the macro network where the AP is located, an SAC of the macro network where the AP is located. The information about the broadband fixed network that the AP accesses includes: a port number or an IP address or the like of the broadband (ADSL) fixed network that the AP accesses.

In step 33, the AG establishes a mapping relationship between the registration information about the APs and the CN nodes.

The AG establishes a mapping relationship between a CN node list and the acquired registration information about the APs, and selects a CN node for each AP according to the established mapping relationship. The CN node may include a mobile switching center (MSC) server or a serving GPRS support node (SGSN).

The AG may map the APs having the same registration information to the same CN node according to the established mapping relationship between the CN node list and the registration information about the APs, for example, AP1 and AP2 have the same registration information, and are mapped to MSC1. Alternatively, the AG may map the APs having different registration information to different CN nodes. For example, AP1 and AP2 have different registration information, and AP1 is mapped to MSC1 while AP2 is mapped to MSC2). Alternatively, the AG may map the APs having different registration information to the same CN node. For example, AP1 and AP2 have different registration information, but are both mapped to MSC1.

Once the CN node is determined, all the UEs connected to each AP may access the same CN node.

In step 35, the UE enters the coverage of the AP from the macro network.

In this case, the UE needs to initiate a radio resource control setup (RRC setup) process.

In step 37, the UE sends a direct transfer message (Init Direct Transfer) to the AP.

In step 39, the AP sends an Init UE MSG to the AG.

In step 311, the AG identifies the specific AP that sends the Init UE MSG, and determines the CN node that the AP is mapped to is a first CN node (CN1) according to the preset mapping relationship between the registration information about the APs and the CN nodes.

Because the APs have already been registered with the AG, after receiving the Init UE MSG, the AG identifies the specific AP that sends the service request according to information about a transport layer from which the service request is sent, for example, an IP address, and an SCTP port number, and determines a CN node for the AP according to the preset mapping relationship between the registration information about the APs and the CN nodes.

For example, if a mapping relationship between the LACs of the APs and the CN nodes is preset on the AG, when the AP sends an Init UE MSG to the AG, the AG identifies the specific AP that sends the Init UE MSG, and queries the preset mapping relationship according to the LAC of the AP, so as to determine a CN node that UEs connected to the AP need to access for the AP.

If a mapping relationship between the IP addresses of the APs and the CN nodes is preset on the AG, when the AP sends an Init UE MSG to the AG, the AG obtains the IP address of the AP or a subnet mask corresponding to the IP address (for example, different CN nodes are assigned to 10.1.255.255 and 10.2.255.255) according to information about a transport layer from which the message is sent, for example, an IP address, and an SCTP port number, and queries the preset mapping relationship, so as to determine a CN node that UEs connected to the AP need to access for the AP.

Therefore, a proper CN node can be selected for the AP based on a deployment range of the fixed network, so that integrated operators operating both the fixed and mobile networks are enabled to perform uniform configuration and management on the fixed and mobile networks.

In step 313, the AG sends the Init UE MSG to the determined CN 1.

In step 315, the CN1 initiates a temporary mobile subscriber identity (TMSI) reallocation and home location register (HLR) information update process.

It is assumed that the CN node that the UE accesses in the macro network is a second CN node (CN2), and the CN node in the CN that the UE accesses is changed (that is, changed from CN2 to CN1) when the UE enters the coverage of the AP from the macro network, so that CN1 needs to reallocate TMSI and update HLR information for the UE.

In this embodiment, a mapping relationship between the registration information about the APs and the CN nodes is preset on the AG. When the AP sends a service request of the UE, the AG identifies the specific AP that sends the service request according to transport layer information of the AP and the AG, and selects a corresponding CN node for the AP according to the preset mapping relationship, thereby enabling the UE to select the CN node to be accessed from multiple CN nodes no matter whether the CN node supports the Iu-flex function, so as to realize resource sharing and load sharing between the CN nodes, and improve the stability and reliability of the AP system. In the prior art, the CN node is selected based on the UE, and a CN node corresponding to the UE is selected by transferring information (IDNNS) carried by the UE during the service establishment to the RNC or the AG; in this embodiment of the present invention, the CN node is selected based on the information about the AP, and the CN node corresponding to the AP is selected by the AG during the service establishment of the UE according to the mapping relationship between the registration information about the APs and the CN nodes.

The AP may be used as household equipment or telecommunications equipment. Due to special properties of the AP, the AP has its own characteristics as compared with a conventional base station (BS). The number of APs is huge, and the deployment of the APs is regional. For instance, the APs are concentrated in communities of large cities or enterprises, but the number of users for each AP is quite few. In this embodiment of the present invention, the CN node is selected based on the registration information about the AP, which conforms to the distribution characteristics of the AP. Moreover, the registration information about the AP may be an AP-ID, an area ID of the AP (including a PLMN-ID, a Cell-ID, an LAC, an RAC, an SAC, or the like of the AP), an area ID of a macro network where the AP is located (including a PLMN-ID, an LAC, an RAC, an SAC, a Cell-ID, or the like), latitude and longitude geographic information about the AP, or information about an ADSL fixed network that the AP accesses (including a port number, an IP address, or the like), which can be configured according to actual requirements of the operators. Therefore, the implementation is more flexible, simple, and convenient as long as the corresponding setting and processing of the mapping relationship are added to the AG. Meanwhile, the upgrading of the CN node is avoided. After the migration of the AP, due to the change of the location information about the AP, the AG acquires the latest registered location information about the AP, and updates information on a configuration list accordingly, thereby enabling the UE to select the CN node to be accessed from multiple CN nodes according to the configuration list, which is rather flexible to implement.

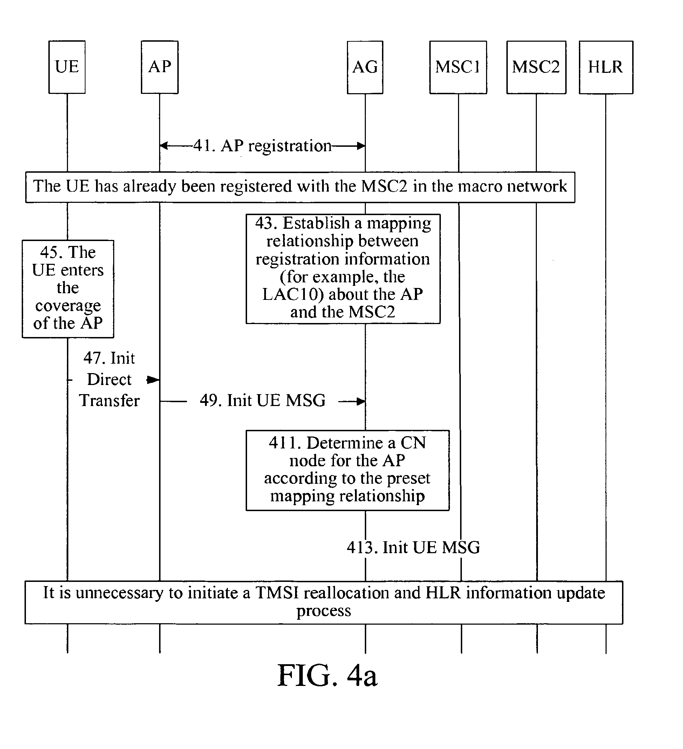

FIG. 4a is a signaling exchange diagram of a method for accessing CN nodes according to a third embodiment of the present invention. The difference between this embodiment and the embodiment of FIG. 3 lies in that, this embodiment further reduces inter-office signaling generated when the UE moves between the access network and the macro network. Referring to FIG. 4a, the method of this embodiment includes the following steps.

In step 41, the AP initiates a registration process to the AG, and the AG acquires registration information about the AP during the registration process.

The reported registration information about the AP includes an area ID of the AP (for example, an LAC10 of the AP, an RAC 10 of the AP, or an SAC 10 of the AP) and an area ID of a macro network where the AP is located (for example, an LAC1 of the macro network where the AP is located, an RAC 1 of the macro network where the AP is located, or an SAC1 of the macro network where the AP is located). In this embodiment, for example, the registration information about the AP includes the LAC10 of AP and the LAC1 of the macro network where the AP is located.

In step 43, the AG establishes a mapping relationship between the LAC10 of the AP and the CN nodes (for example, MSC servers).

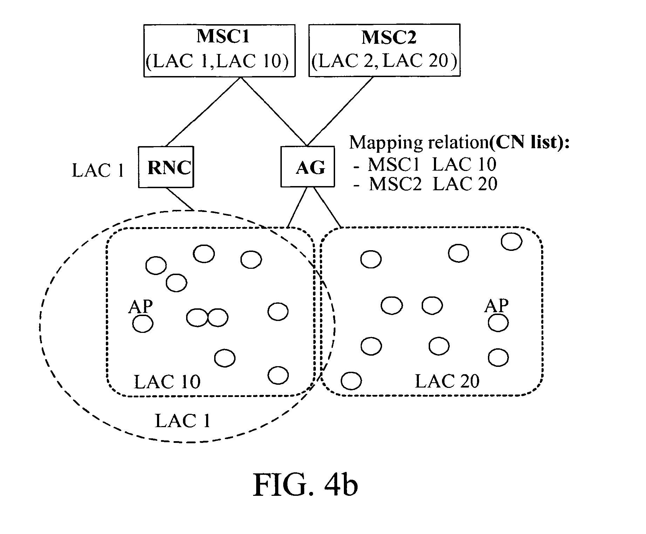

FIG. 4b is a schematic diagram illustrating network architecture of an application scenario in which a UMTS AP system shares the MSC with a macro network according to the present invention. Referring to FIG. 4b, during the establishment of the mapping relationship between the LAC10 of the AP and the MSC servers, multiple MSC servers may be defined based on a configuration range of the AP network, for example, a first MSC server (that is, MSC1) and a second MSC server (that is, MSC2). Preferably, a mapping relationship is established between the area ID of the AP (for example, the LAC10) and area ID of the macro network where the AP is located (for example, the LAC1) and the same MSC server (for example, the MSC2). In this case, if the UMTS AP system and the macro network share the MSC server, that is, the LACs of the two form a mapping relationship with the same MSC server, when the location of the UE changes between the AP network and the macro network, the MSC server does not need to initiate a TMSI reallocation and HLR information update process for the UE. Thereby, the inter-office signaling of the MSC server generated when the UE moves between the AP network and the macro network is reduced.

It is assumed that the UE has already been registered with the MSC2 through the RNC before entering the coverage of the AP, and a mapping relationship between the area ID of the macro network LAC1 and the MSC2 exists in the macro network, so that a mapping relationship between the LAC10 of the AP and the MSC2 is established if the capacity of the MSC2 allows.

In step 45, the UE enters the coverage of the AP from the macro network.

In step 47, the UE sends an Init Direct Transfer to the AP.

In step 49, the AP sends an Init UE MSG to the AG.

In step 411, the AG identifies the specific AP that sends the Init UE MSG according to information about a transport layer, and determines the CN node that the AP is mapped to is the MSC2 according to the preset mapping relationship between the LAC10 of the AP and the CN node.

In step 413, the AG sends the Init UE MSG to the determined MSC2.

Because the UE has already been registered with the MSC2 through the macro network before entering the coverage of the AP, although the UE enters the AP system from the macro network, the CN node (MSC2) in the CN that the UE accesses is not changed, so that the MSC2 does not need to initiate a TMSI reallocation and HLR information update process for the UE.

In this embodiment, to achieve the technical effect of enabling the UE to select the CN node to be accessed from multiple CN nodes, as the CN node that the UE accesses when moving between the AP network and the macro network is not changed, it is unnecessary to initiate a TMSI reallocation and HLR information update process for the UE, thereby reducing the inter-office signaling of the CN node generated when the UE moves between the AP network and the macro network.

Based on the technical solution of this embodiment, in step 49, when sending the Init UE MSG to the AG, the AP may also directly send the LAC1 of the macro network where the AP is currently located to the AG, and then the AG queries a mapping relationship between the LAC1 of the macro network and the CN node, so as to determine the CN node that the UE accesses is MSC2. In this manner, as the CN node that the UE accesses when moving between the AP network and the macro network is not changed, it is unnecessary to initiate a TMSI reallocation and HLR information update process for the UE, thereby reducing the inter-office signaling of the CN node generated when the UE moves between the UMTS AP system and the macro network.

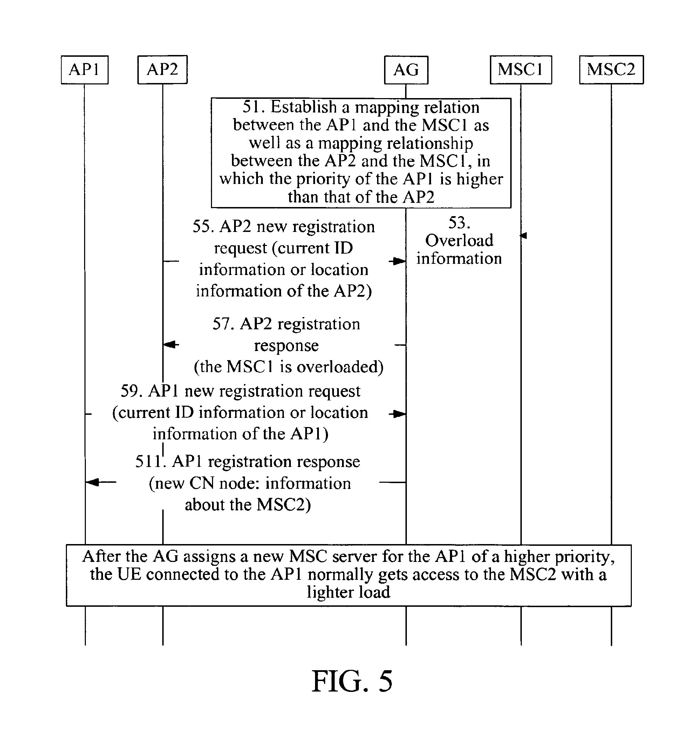

FIG. 5 is a signaling exchange diagram of a method for accessing CN nodes according to a fourth embodiment of the present invention. The difference between this embodiment and the embodiment of FIG. 3 or FIG. 4a lies in that, this embodiment further realizes differentiated operation between different APs. Referring to FIG. 5, the method of this embodiment includes the following steps.

In step 51, the AP initiates a registration request to the AG, and the AG acquires the registration information about the AP1; the AP2 initiates a registration request to the AG, and the AG acquires the registration information about the AP2. The AG establishes a mapping relationship between the registration information about the first AP (AP1) and the first CN node (MSC1), and a mapping relationship between the registration information about the second AP (AP2) and the first CN node (MSC1), and configures different priorities for the AP1 and the AP2, in which the priority of the AP1 is higher than the priority of the AP2.

In step 53, when the MSC1 is overloaded, the AG acquires overload information about the MSC1.

In step 55, the AP2 re-initiates a registration request, for example, the AP2 is again powered on to re-initiate a registration request to the AG, and the registration request carries the current ID information or location information of the AP2.

In step 57, the AG sends a registration response message to the AP2, and the registration response message carries the overload information about the MSC1.

The AG queries a mapping relationship between the registration information about the AP2 and the CN nodes preset by the AG according to the received current ID information or location information of the AP2, so as to determine the CN node that the AP2 is mapped to is the MSC1, in which the priority of the AP2 is low, and the MSC1 is currently in an overload state. Then, the AG sends the overload information about the MSC1 to the AP2. The overload information about the MSC1 is sent to the AP2 through the registration response message.

After receiving the overload information about the MSC1, the AP2 limits the access of the UE connected to the AP2 to the CN.

In step 59, the AP1 re-initiates a registration request, for example, the AP1 is again powered on to re-initiate a registration request to the AG, and the registration request carries the current ID information or location information of the AP1.

The implementation of step 57 and step 59 has no limitation in time sequence, and the two steps can be carried out synchronously.

In step 511, the AG selects another CN node (MSC2) with a lighter load for the AP1, and sends a registration response message to the AP1, in which the registration response message carries information about the CN node (MSC2) reselected for the AP1.

The AG queries a mapping relationship between the registration information and the CN nodes preset by the AG according to the current ID information or location information sent by the AP1, so as to determine the CN node that the AP1 is mapped to is the MSC1, in which the priority of the AP1 is high, and the MSC1 is currently in an overload state. Then, the AG selects another CN node (MSC2) with a lighter load for the AP 1. The information about the change of the CN node to be accessed is sent to the AP1 through the registration response message.

After the AG assigns the MSC2 for the AP1 of a higher priority, the UE connected to the AP1 normally accesses the MSC2 with a lighter load.

Based on the technical solution of this embodiment, the AG may directly acquire the load condition of the CN node, and the load condition includes: a connection state of the CN node, overload information, and the like. After acquiring the load condition of the CN node, the AG does not need to forward the load condition to each AP, but selects a part of the APs according to a preset policy and forwards the load condition of the CN node to the selected APs, thereby reducing the signaling traffic. If a certain CN node is overloaded or cannot be connected, the AG re-assigns a proper CN node for all the APs mapped to the CN node according to a preset rule. The preset rule may be randomly selecting another CN node from CN node information (for example, a CN node list) stored in the AG, or configuring priorities for the CN nodes stored in the AG and re-assigning a proper CN node for the APs mapped to the CN node that is overloaded or cannot be connected according to the priorities of the CN nodes, in which the priorities of the CN nodes may be pre-configured or vary dynamically according to the load condition.

Moreover, based on the technical solution of this embodiment, the AG may also notify the result of the selection of the CN node or the change of the state of the CN node to the AP via an AP-AG interface message. In this case, if the CN node is overloaded, the AP may also limit the access of the UE. Specifically, the AG may selectively inform a part of newly accessed APs of the selected CN node and the load condition thereof through the registration response message, or transparently transmit the overload information about the CN node to a part of the APs at work, so as to limit the access of the UE. However, for the APs of high priorities, the AG directly selects other CN nodes with a lighter load if possible, that is, it is unnecessary to limit the access of the UEs in communication with the APs of high priorities. The priorities of the APs may be configured according to the registered ID information or location information about the AP, for example, different SACs are assigned for the APs with the same LAC (mapped to the same CN node), so that the priorities of different APs are obtained according to the pre-configured priorities of the SACs, thereby realizing differentiated operation of the APs and preventing the overload of another CN node caused by a large number of the UEs simultaneously accessing the CN node through the corresponding APs

Persons skilled in the art should understand that, the method for accessing CN nodes provided in the embodiments of the present invention may also be applied to Global System for Mobile Communications (GSM), Code Division Multiple Access (CDMA), Worldwide Interoperability for Microwave Access (WIMAX), Long Term Evolution (LTE), and other systems, which will not be described herein again.

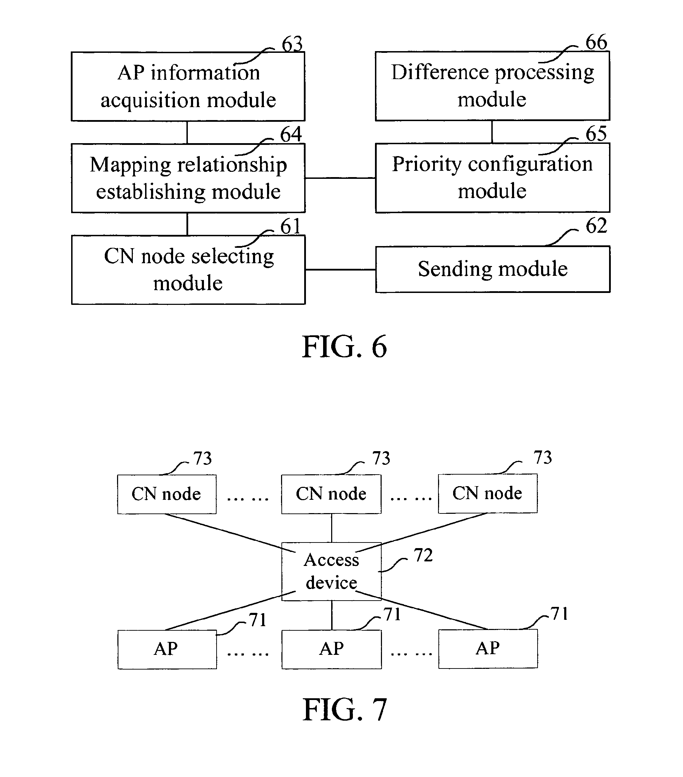

FIG. 6 is a schematic structural view of an access device according to an embodiment of the present invention. Referring to FIG. 6, the access device of this embodiment includes a CN node selecting module 61 and a sending module 62.

The CN node selecting module 61 is configured to select a CN node to be accessed by an AP according to a preset mapping relationship between the APs and the CN nodes when receiving a service request from the AP.

The sending module 62 is configured to send the service request to the selected CN node.

Based on the above technical solution, the access device of this embodiment further includes an AP information acquisition module 63 and a mapping relationship establishing module 64.

The AP information acquisition module 63 is configured to acquire registration information about the AP.

The registration information about the AP includes ID information or location information about the AP. Specifically, the registration information about the AP includes: an AP-ID, or a PLMN-ID of the AP, or an area ID of the AP, or an area ID of a macro network where the AP is located, or information about a geographic location of the AP, or information about a broadband fixed network that the AP accesses.

The mapping relationship establishing module 64 is configured to establish a mapping relationship between the APs and the CN nodes according to the registration information about the AP.

To reduce the inter-office signaling generated when the UE moves between different networks, the mapping relationship establishing module 64 is further configured to map the same CN node for the area ID of the AP and the area ID of the macro network where the AP is located.

To realize differentiated operation of different APs, based on the above technical solution, the access device of this embodiment further includes a priority configuration module 65 and a difference processing module 66.

The priority configuration module 65 is configured to configure a different priority for multiple APs each, where the APs are mapped to the same CN node.

The difference processing module 66 is configured to send overload information of the CN node to the AP or select another CN node for the AP according to the priorities of the APs mapped to the CN node when the CN node is overloaded.

In this embodiment, the CN node selecting module is configured to select a proper CN node for an AP according to a preset mapping relationship between the APs and the CN nodes, and the sending module sends a service request to the selected CN node, thereby enabling a UE to select the CN node to be accessed from multiple CN nodes, so as to realize resource sharing and load sharing between the CN nodes, and improve the stability and reliability of the AP system. Moreover, in this embodiment, the CN node is not required to support the Iu-flex function. If the existing CN node does not support the Iu-flex function, the technical solution of this embodiment can be adopted without upgrading the CN node or modifying the CN. Therefore, the entire system is more practical and easy to implement, the impact on the CN is reduced, and the flexibility of access to multiple CN nodes of the UE is significantly enhanced. In addition, in this embodiment, the mapping relationship establishing module is configured to map the same CN node for the area ID of the AP and the area ID of the macro network where the AP is located, thereby reducing the inter-office signaling of the CN node generated when the UE moves between the AP network and the macro network. In this embodiment, different priorities may be set for different APs, so as to realize differentiated operation of different APs when the CN node becomes abnormal.

In practice, the access device according to the embodiment of the present invention may be an AG, a Home Node B (HNB) gateway (HNB-GW), or other access devices configured to manage the AP. The access device of the present invention may also be applied to systems such as UMTS, GSM, CDMA, WIMAX, and LTE.

FIG. 7 is a schematic structural view of a system for accessing CN nodes according to the present invention. Referring to FIG. 7, the system of this embodiment includes APs 71, an access device 72, and multiple CN nodes 73.

The AP 71 is configured to send a service request to the access device 72. One AP 71 may communicate with one or more UEs, and the AP 71 is triggered by the UE to send a service request of the UE to the access device 72.

In the system of this embodiment, the access device 72 may be any one of the access devices according to the embodiment of FIG. 6 and other corresponding embodiments. For example, the access device 72 is configured to select the CN node 73 to be accessed by the AP 71 according to a preset mapping relationship between the APs 71 and the CN nodes 73 when receiving the service request from the AP 71, and send the service request to the selected CN node 73. One access device 72 may communicate with one or more APs 71.

The CN node 73 establishes a service connection for the UE that initiates the service request when receiving the service request from the access device 72.

In this embodiment, a proper CN node is selected for an AP according to a preset mapping relationship between the APs and the CN nodes, and a service request is sent to the selected CN node, thereby enabling a UE to access among multiple CN nodes and realizing the access of the access device to multiple CN nodes based on the information about the AP. Moreover, in this embodiment, the CN node is not required to support the Iu-flex function. If the existing CN node does not support the Iu-flex function, the technical solution of this embodiment can be adopted without upgrading the CN node or modifying the CN. Therefore, the access to multiple CN nodes is implemented based on the technical solution of this embodiment, so that the entire system is more practical and easy to implement, the impact on the CN is reduced, and the flexibility of access to multiple CN nodes is significantly enhanced.

In the system for accessing CN nodes of the present invention, a detailed structure of the access device has already been described in the embodiment of FIG. 6, which will not be described herein again. The AP may also be referred to as an HNB. The access device of this embodiment may actually be an AG, an HNB-GW, or other access devices configured to manage the AP. The CN node may include an MSC, an SGSN, or other CN nodes. The principle of the access to multiple CN nodes realized by the system for accessing CN nodes is described in the corresponding embodiments in FIG.. 1 to FIG. 5 of the present invention, so the details are not given herein again. The system for accessing CN nodes of the present invention may also be applied to systems such as UMTS, GSM, CDMA, WIMAX, and LTE.

It should be understood by persons skilled in the art that the accompanying drawings are merely schematic diagrams of preferred embodiments, and modules or processes in the accompanying drawings are not necessarily required to implement the present invention.

It should be understood by persons skilled in the art that, modules in a device according to an embodiment may be distributed in the device of the embodiment according to the description of the embodiment, or be correspondingly changed to be disposed in one or more devices different from this embodiment. The modules of the above embodiment may be combined into one module, or further divided into a plurality of sub-modules.

The sequence numbers of the above embodiments of the present invention are merely for the convenience of description, and do not imply the preference among the embodiments.

Persons of ordinary skill in the art should understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as a ROM, a RAM, a magnetic disk, or an optical disk.

Finally, it should be noted that the above embodiments are provided for merely elaborating the technical solutions of the present invention, but not intended to limit the present invention. It should be understood by persons of ordinary skill in the art that although the present invention has been described in detail with reference to the foregoing embodiments, modifications or equivalent replacements can be made to the technical solutions without departing from the scope of the present invention.

## Claims

1. A method for accessing a core network, CN, node, comprising:
receiving (49), by an access gateway, AG, a service request from an access point, AP, wherein the AG implements control and management on the AP;
selecting (411), by the AG, a CN node to be accessed by the AP, according to a preset mapping relationship between APs and CN nodes; and
sending (413), by the AG, the service request to the selected CN node.

2. The method according to claim 1, further comprising:
acquiring (41) registration information about the AP, wherein the registration information comprises: an equipment identifier ,ID, of the AP, or a mobile network ID of the AP, or an area ID of the AP, or an area ID of a macro network where the AP is located, or information about a geographic location of the AP, or information about a broadband fixed network that the AP accesses; and
establishing (43) a mapping relationship between the APs and the CN nodes according to the registration information about the AP.

3. The method according to claim 2, wherein the establishing the mapping relationship between the APs and the CN nodes comprises:
mapping the same CN node for the area ID of the AP and the area ID of the macro network where the AP is located.

4. The method according to claim 1, further comprising:
configuring a different priority for each of multiple APs, where the APs are mapped to the same CN node.

5. The method according to claim 4, wherein after the configuring the different priority for multiple APs each, the method further comprises:
when the CN node is overloaded, sending (57) overload information about the CN node to the AP or selecting another CN node for the AP according to the priorities of the APs mapped to the CN node.

6. An access gateway, AG, wherein
the AG is configured to receive a service request from an access point, AP, and the AG being configured to implement control and management on the AP; the AG further comprises:
a core network ,CN, node selecting module (61), configured to select a CN node to be accessed by the AP, according to a preset mapping relationship between APs and CN nodes when receiving the service request from the AP; and
a sending module (62), configured to send the service request to the selected CN node.

7. The AG according to claim 6, further comprising:
an AP information acquisition module (63), configured to acquire registration information about the AP, wherein the registration information about the AP comprises: an equipment identifier ,ID, of the AP, or a mobile network ID of the AP, or an area ID of the AP, or an area ID of a macro network where the AP is located, or information about a geographic location of the AP, or information about a broadband fixed network that the AP accesses; and
a mapping relationship establishing module (64), configured to establish the mapping relationship between the APs and the CN nodes according to the registration information about the AP.

8. The AG according to claim 7, wherein the mapping relationship establishing module is further configured to map the same CN node for the area ID of the AP and the area ID of the macro network where the AP is located.

9. The AG according to claim 6, further comprising:
a priority configuration module (65), configured to configure a different priority for each of multiple APs, where the APs are mapped to the same CN node.

10. The AG according to claim 9, further comprising:
a difference processing module (66), configured to send overload information about the CN node to the AP or select another CN node for the AP according to the priorities of the APs mapped to the CN node when the CN node is overloaded.

11. A system for accessing a core network, CN, node, comprising access points ,APs (71), and multiple CN nodes (73), and further comprising an access gateway, AG (72), according to any one of claims 6 to 10.

## Patentansprüche

1. Verfahren für den Zugriff auf den Knoten eines Kernnetzwerks CN (Core Network), das Folgendes umfasst:
Empfangen (49) einer Dienstanforderung von einem Zugangspunkt AP durch ein Zugangsgateway AG, wobei das AG Steuerung und Management auf dem AP implementiert;
Auswählen (411) eines CN-Knotens für den Zugriff durch den AP durch das AG gemäß einer voreingestellten Abbildungsbeziehung zwischen APs und CN-Knoten; und
Senden (413) der Dienstanforderung an den ausgewählten CN-Knoten durch das AG.

2. Verfahren nach Anspruch 1, das weiterhin Folgendes umfasst:
Erfassen (41) von Registrierungsinformationen über den AP, wobei die Registrierungsinformationen Folgendes umfassen: eine Geräteidentifikation ID des AP oder eine Funknetzwerk-ID des AP oder eine Bereichs-ID des AP oder eine Bereichs-ID eines Makronetzwerks, wo sich der AP befindet, oder Informationen über einen geografischen Ort des AP oder Informationen über ein festes Breitbandnetzwerk, auf das der AP zugreift; und
Herstellen (43) einer Abbildungsbeziehung zwischen den APs und den CN-Knoten gemäß den Registrierungsinformationen über den AP.

3. Verfahren nach Anspruch 2, wobei das Herstellen der Abbildungsbeziehung zwischen den APs und den CN-Knoten Folgendes umfasst:
Abbilden des gleichen CN-Knotens für die Bereichs-ID des AP und die Bereichs-ID des Makronetzwerks, wo sich der AP befindet.

4. Verfahren nach Anspruch 1, das weiterhin Folgendes umfasst:
Konfigurieren einer anderen Priorität für jeden von mehreren APs, wobei die APs auf den gleichen CN-Knoten abgebildet werden.

5. Verfahren nach Anspruch 4, wobei nach dem Konfigurieren der verschiedenen Priorität für jeweils mehrere APs das Verfahren weiterhin Folgendes umfasst:
wenn der CN-Knoten überlastet ist, Senden (57) von Überlastinformationen über den CN-Knoten an den AP oder Wählen eines anderen CN-Knotens für den AP gemäß den Prioritäten der auf den CN-Knoten abgebildeten APs.

6. Zugangsgateway AG, wobei
das AG konfiguriert ist zum Empfangen einer Dienstanforderung von einem Zugangspunkt AP und das AG konfiguriert ist zum Implementieren von Steuerung und Management auf dem AP; wobei das AG weiterhin Folgendes umfasst:
ein Kernnetzwerk-CN-Knotenwählmodul (61), konfiguriert zum Wählen eines CN-Knotens für den Zugriff durch den AP gemäß einer voreingestellten Abbildungsbeziehung zwischen APs und CN-Knoten beim Empfang der Dienstanforderung von dem AP; und
ein Sendemodul (62), konfiguriert zum Senden der Dienstanforderung an den ausgewählten CN-Knoten.

7. AG nach Anspruch 6, das weiterhin Folgendes umfasst:
ein AP-Informationserfassungsmodul (63), konfiguriert zum Erfassen von Registrierungsinformationen über den AP, wobei die Registrierungsinformationen über den AP Folgendes umfassen:
eine Geräteidentifikation ID des AP oder eine Funknetzwerk-ID des AP oder eine Bereichs-ID des AP oder eine Bereichs-ID eines Makronetzwerks, wo sich der AP befindet, oder Informationen über einen geografischen Ort des AP oder Informationen über ein festes Breitbandnetzwerk, auf das der AP zugreift; und
ein Abbildungsbeziehungsherstellungsmodul (64), konfiguriert zum Herstellen der Abbildungsbeziehung zwischen den APs und den CN-Knoten gemäß den Registrierungsinformationen über den AP.

8. AG nach Anspruch 7, wobei das Abbildungsbeziehungsherstellungsmodul weiterhin konfiguriert ist zum Abbilden des gleichen CN-Knotens für die Bereichs-ID des AP und die Bereichs-ID des Makronetzwerks, wo sich der AP befindet.

9. AG nach Anspruch 6, das weiterhin Folgendes umfasst:
ein Prioritätskonfigurationsmodul (65), konfiguriert zum Konfigurierten einer anderen Priorität für jeden von mehreren APs, wobei die APs auf den gleichen CN-Knoten abgebildet werden.

10. AG nach Anspruch 9, das weiterhin Folgendes umfasst:
ein Differenzverarbeitungsmodul (66), konfiguriert zum Senden von Überlastinformationen über den CN-Knoten an den AP oder Wählen eines anderen CN-Knotens für den AP gemäß den Prioritäten der auf den CN-Knoten abgebildeten APs, wenn der CN-Knoten überlastet ist.

11. System für den Zugriff auf den Knoten eines Kernnetzwerks CN, umfassend Zugangspunkte APs (71) und mehrere CN-Knoten (73), und weiterhin umfassend ein Zugangsgateway AG (72), gemäß einem der Ansprüche 6 bis 10.

## Revendications

1. Procédé d'accès à un noeud de réseau central, CN, comprenant :
la réception (49), par une passerelle d'accès, AG, d'une demande de service depuis un point d'accès, AP, l'AG mettant en oeuvre une commande et une gestion sur l'AP ;
la sélection (411), par l'AG, d'un noeud CN devant être sollicité par l'AP, en fonction d'une relation de mise en correspondance préétablie entre les AP et les noeuds CN ; et
l'envoi (413), par l'AG, de la demande de service au noeud CN sélectionné.

2. Procédé selon la revendication 1, comprenant en outre :
l'acquisition (41) d'informations d'enregistrement relatives à l'AP, les informations d'enregistrement comprenant : un identifiant, ID, d'équipement de l'AP, ou un ID de réseau mobile de l'AP, ou un ID de zone de l'AP, ou un ID de zone d'un macro réseau où est situé l'AP, ou des informations relatives à un emplacement géographique de l'AP, ou des informations relatives à un réseau fixe à large bande que sollicite l'AP ; et l'établissement (43) d'une relation de mise en correspondance entre les AP et les noeuds CN en fonction des informations d'enregistrement relatives à l'AP.

3. Procédé selon la revendication 2, dans lequel l'établissement de la relation de mise en correspondance entre les AP et les noeuds CN comprend :
la mise en correspondance du même noeud CN pour l'ID de zone de l'AP et l'ID de zone du macro réseau où est situé l'AP.

4. Procédé selon la revendication 1, comprenant en outre :
la configuration d'une priorité différente pour chacun des multiples AP, les AP étant mis en correspondance avec le même noeud CN.

5. Procédé selon la revendication 4, comprenant en outre, après la configuration de la priorité différente pour chacun des multiples AP :
quand le noeud CN est surchargé, l'envoi (57) d'informations de surcharge relatives au noeud CN à l'AP ou la sélection d'un autre noeud CN pour l'AP en fonction des priorités des AP mis en correspondance avec le noeud CN.

6. Passerelle d'accès, AG, dans laquelle :
l'AG est configurée pour recevoir une demande de service depuis un point d'accès, AP,
et l'AG étant configurée pour mettre en oeuvre une commande et une gestion sur l'AP ;
l'AG comprenant en outre:
un module de sélection de noeud de réseau central, CN, (61), configuré pour sélectionner un noeud CN devant être sollicité par l'AP, en fonction d'une relation de mise en correspondance préétablie entre les AP et les noeuds CN à la réception de la demande de service depuis l'AP ; et
un module d'envoi (62), configuré pour envoyer la demande de service au noeud CN sélectionné.

7. AG selon la revendication 6, comprenant en outre :
un module d'acquisition d'informations AP (63), configuré pour acquérir des informations d'enregistrement relatives à l'AP, les informations d'enregistrement relatives à l'AP comprenant : un identifiant, ID, d'équipement de l'AP, ou un ID de réseau mobile de l'AP, ou un ID de zone de l'AP, ou un ID de zone d'un macro réseau où est situé l'AP, ou des informations relatives à un emplacement géographique de l'AP, ou des informations relatives à un réseau fixe à large bande que sollicite l'AP ; et un module d'établissement d'une relation de mise en correspondance (64), configuré pour établir la relation de mise en correspondance entre les AP et les noeuds CN en fonction des informations d'enregistrement relatives à l'AP.

8. AG selon la revendication 7, dans lequel le module d'établissement de la relation de mise en correspondance est configuré en outre pour mettre en correspondance le même noeud CN pour l'ID de zone de l'AP et l'ID de zone du macro réseau où est situé l'AP.

9. AG selon la revendication 6, comprenant en outre :
un module de configuration de priorité (65), configuré pour configurer une priorité différente pour chacun des multiples AP, les AP étant mis en correspondance avec le même noeud CN.

10. AG selon la revendication 9, comprenant en outre :
un module de traitement de différence (66), configuré pour envoyer des informations de surcharge relatives au noeud CN à l'AP ou sélectionner un autre noeud CN pour l'AP en fonction des priorités des AP mis en correspondance avec le noeud CN quand le noeud CN est surchargé.

11. Système d'accès à un noeud de réseau central, CN, comprenant des points d'accès, AP (71), et des noeuds CN multiples (73), et comprenant en outre une passerelle d'accès, AG (72), selon l'une quelconque des revendications 6 à 10.
